(19) **Europäisches Patentamt / European Patent Office / Office européen des brevets**

(11) **EP 4 560 575 A1**

(12) **EUROPEAN PATENT APPLICATION**
published in accordance with Art. 153(4) EPC

(43) Date of publication:
**28.05.2025 Bulletin 2025/22**

(21) Application number: **22951989.7**

(22) Date of filing: **21.07.2022**

(51) International Patent Classification (IPC):
*G06T 7/593* (2017.01)

(52) Cooperative Patent Classification (CPC):
**G06T 7/593**

(86) International application number:
**PCT/JP2022/028392**

(87) International publication number:
**WO 2024/018605 (25.01.2024 Gazette 2024/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Sony Interactive Entertainment Inc. Tokyo 108-0075 (JP)**

(72) Inventor: **KIMURA, Atsushi Tokyo 108-0075 (JP)**

(74) Representative: **Müller Hoffmann & Partner Patentanwälte mbB St.-Martin-Straße 58 81541 München (DE)**

(54) **IMAGE INFORMATION PROCESSING DEVICE, IMAGE INFORMATION PROCESSING METHOD, AND PROGRAM**

(57) An image information processing apparatus receives a series of pieces of image data obtained by a moving camera capturing an image in a three-dimensional space, in order to estimate posture information regarding the camera capturing each piece of image data and map information regarding a captured target. The image information processing apparatus includes a processor that estimates the posture information regarding the camera at multiple points and the map information, and optimizes the estimated map information by projecting a common selection point in the captured three-dimensional space to different pieces of the captured image data to obtain a set of projection points as related points, before comparing, in terms of luminance, the projection points with each other as the related points. In the optimization process, the processor recognizes an object in the three-dimensional space captured in each of the multiple pieces of image data so as to select the selection point by a predetermined method from over the recognized object captured in common in the multiple pieces of image data.

FIG. 1

**Description**

[Technical Field]

The present invention relates to an image information processing apparatus, an image information processing method, and a program.

[Background Art]

A technology (SLAM: Simultaneous Localization and Mapping) for simultaneously estimating a self-position and an environmental map (map information) using various sensors is well known.
There are various known methods for implementing the SLAM. What has become popular in recent years is what is called a direct method by which multiple images are captured by cameras used as sensors (SLAM in this case is specifically called "Visual SLAM" which, however, is simply referred to as SLAM hereunder) at mutually different positions and in mutually different postures and targets captured in the images are compared with each other in luminance value in order to optimize and acquire various parameters for estimating the self-position and the environmental map.

[Summary]

[Technical Problem]

Whereas the SLAM using the direct method permits acquisition of spatially dense information, it entails the problem of increasing the number of parameters to be optimized, which leads to a high calculation load. As a result, the SLAM based on the existing direct method makes it difficult to perform calculations in real time.
The present invention has been made in view of the above circumstances and provides, as an object, an image information processing apparatus, an image information processing method, and a program for alleviating the calculation load of the SLAM that uses the direct method.

[Solution to Problem]

In solving the above problem and according to one embodiment of the present invention, there is provided an image information processing apparatus for receiving a series of pieces of image data obtained by a moving camera capturing an image in a three-dimensional space, in order to estimate posture information regarding the camera capturing each piece of image data and map information regarding a captured target. The image information processing apparatus includes a processor that executes an estimation process of estimating the posture information regarding the camera at multiple points and the map information, and an optimization process of optimizing the estimated map information by projecting a common selection point in the captured three-dimensional space to different pieces of the captured image data to obtain a set of projection points as related points, before comparing, in terms of luminance, the projection points with each other as the related points. In the optimization process, the processor recognizes an object in the three-dimensional space captured in each of the multiple pieces of image data so as to select the selection point by a predetermined method from over the recognized object captured in common in the multiple pieces of image data.

[Advantageous Effects of Invention]

The present invention can alleviate the calculation load of the SLAM that uses the direct method.

[Brief Description of Drawings]

[FIG. 1]

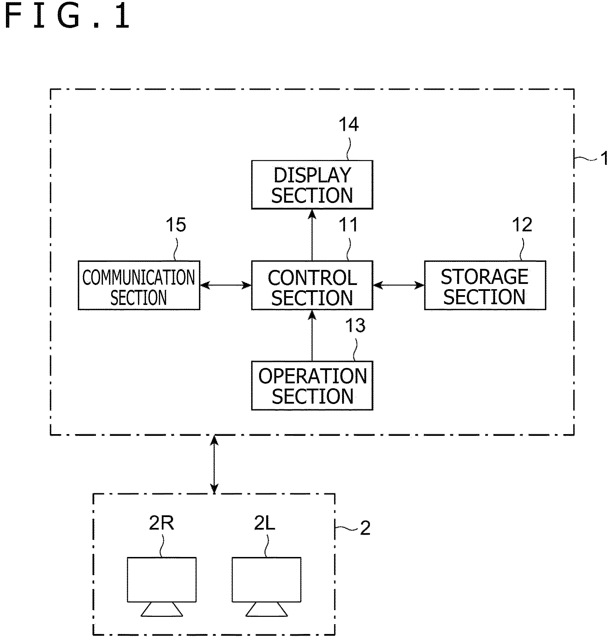

FIG. 1 is a block diagram depicting an exemplary configuration of an image information processing apparatus embodying the present invention.
[FIG. 2]

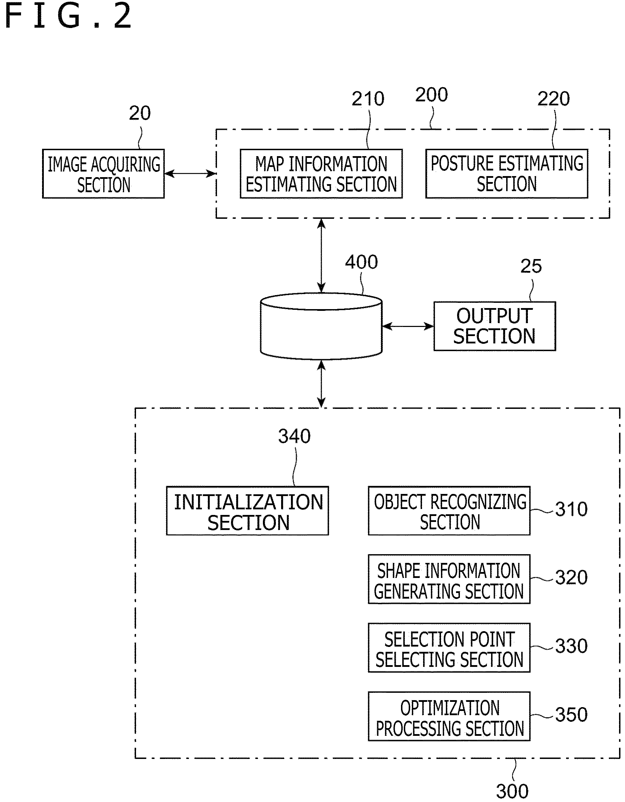

FIG. 2 is a functional block diagram depicting an example of the image information processing apparatus embodying the present invention.
[FIG. 3]

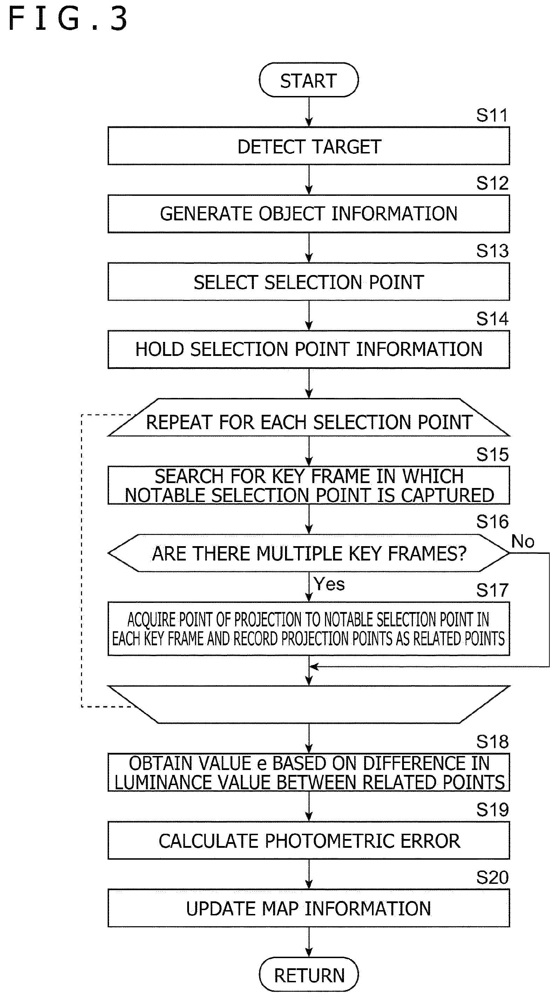

FIG. 3 is a flowchart indicating exemplary operations of the image information processing apparatus embodying the present invention.

[Description of Embodiment]

One embodiment of the present invention is described below with reference to the accompanying drawings. An image information processing apparatus 1 embodying the present invention includes, as depicted in FIG. 1, a control section 11, a storage section 12, an operation section 13, a display section 14, and a communication section 15. Also, a camera 2 may be connected to the image information processing apparatus 1.

The camera 2, while moving in a three-dimensional space targeted for imaging, sequentially captures images in an imaging direction and outputs the captured images as image data. The camera 2 may be a stereo camera. In this case, a pair of cameras 2L and 2R are provided, their imaging directions being set in such a manner that a common imaging target is included in each of their imaging ranges (i.e., such that their imaging ranges overlap with each other), the two cameras being apart from each other at a predetermined distance. In this case, the camera 2 outputs image data acquired by the two cameras 2L and 2R.

Here, the control section 11 is a processor (program-controlled device) such as a CPU (Central Processing Unit) operating in accordance with programs stored in the storage section 12. In this embodiment, the control section 11 obtains a series of pieces of image data acquired by the camera 2 moving between multiple image capture points in the three-dimensional space, the control section 11 accordingly estimating posture information regarding the camera 2 acquiring each piece of image data, and map information regarding the captured target.

In this embodiment, for example, the control section 11 carries out two processes: an estimation process of estimating the posture information regarding the camera 2 at multiple image capture points as well as the map information involved, and an optimization process of optimizing the estimated map information by selecting at least one point as a selection point in the captured three-dimensional space, by projecting the selection point to mutually different pieces of image data to obtain multiple projection points (a projection point for each piece of image data), and by comparing, in terms of luminance, the projection points as mutually related points.

Here, the posture information regarding the camera 2 includes camera position information t (translation component) and a rotation matrix R (rotational component) at an image capture point. Also, the posture information may include a projection matrix $\pi$ of the camera 2 in the image data defined by the position information t and the rotational matrix R. The projection matrix $\pi$ is a matrix that maps points in a global coordinate system to the corresponding pixel positions in the image (two-dimensional). Methods of calculating the projection matrix on the basis of the position information t (translation component) and rotation matrix R (rotational component) at the image capture point and on the basis of an internal parameter K are well known and thus will not be discussed further.

The map information includes coordinate information regarding points in imaging targets (including diverse objects such as walls, pillars, floor surfaces, and desktops) in the three-dimensional space captured by the camera 2. The coordinate information is assumed to be information regarding the coordinates in a predetermined global coordinate system (e.g., a coordinate system not changed by the posture or the like of the camera 2).

In the optimization process of this embodiment, the control section 11 recognizes an object in the three-dimensional space captured in each of the multiple pieces of image data, and selects at least one selection point over the recognized object by a predetermined method. The control section 11 then performs the optimization process that projects each selection point to mutually different pieces of image data to obtain multiple projection points, and compares, in terms of luminance, the projection points with each other as mutually related points, thereby optimizing the estimated map information. The processing content of the control section 11 will be discussed later in detail.

The storage section 12 may be a memory device or a disk device, for example, that holds the programs executed by the control section 11. The storage section 12 also stores various kinds of data of the images to be processed by the control section 11. The storage section 12 thus acts as a work memory for the control section 11.

The operation section 13 receives input of instructions from a user of the information processing apparatus 1. If the information processing apparatus 1 is a home-use game machine, for example, the operation section 13 receives signals representing details of user operations from a controller (not depicted) of the game machine, and outputs information indicative of the operation details to the control section 11. The display section 14 is connected to a display device or the like, and outputs image data to the display device or the like according to the instructions input from the control section 11.

The communication section 15 includes a serial interface such as a USB (Universal Serial Bus) interface and a network interface, for example. The communication section 15 receives image data from an external device such as a camera connected via the serial interface, and outputs the received image data to the control section 11. The communication section 15 may serve to output the data received via the network to the control section 11 or to output data via the network as per the instructions input from the control section 11.

The operations of the control section 11 are explained next. In this embodiment, for example, the control section 11 executes relevant programs stored in the storage section 12 to implement a configuration that functionally includes, as depicted in FIG. 2, an image acquiring section 20, an estimation processing section 200, an optimization section 300, a map information holding section 400, and an output section 25.

The estimation processing section 200 functionally includes a map information estimating section 210 and a posture estimating section 220. The optimization section 300 functionally includes an object recognizing section 310, a shape information generating section 320, a selection point selecting section 330, an initialization section 340, and an optimization processing section 350.

The image acquiring section 20 acquires the image data captured by and input from the camera 2 at multiple image capture points in the three-dimensional space.

The map information estimating section 210 in the estimation processing section 200 holds, in the storage section 12, multiple pieces of image data captured and acquired by the image acquiring section 20 at multiple image capture points, in association with identification information unique to each piece of image data (e.g., serial numbers). Using the multiple pieces of image data thus held, the map information estimating section 210 selects, from the image data, a key frame that satisfies a predetermined condition. Also, on the basis of the position at which the camera 2 has captured each piece of image data, the map information estimating section 210 generates depth information indicating the distance to the target captured by each pixel included in the image data. Given the depth information thus generated, the map information estimating section 210 stores the depth information selected at least as a key frame, in association with the identification information identifying the image data selected as the key frame in the map information holding section 400. At this time, the map information estimating section 210 also stores the image data selected as the key frame into the map information holding section 400 in association with the identification information identifying the image data.

Furthermore, the map information estimating section 210 generates information representing an environmental map based on the generated depth information, and stores the generated information into the map information holding section 400. The above processing of the map information estimating section 210 can be carried out by use of procedures well known as the SLAM process based on the direct method. An example of the processing will be explained later.

Also, the posture estimating section 220 uses multiple pieces of image data obtained by the image acquiring section 20 and held in the storage section 12 for acquiring posture information P regarding the camera 2 at an image capture point T at which each piece of image data was captured and posture information P regarding the camera 2 at the time of capturing the image data. Whereas the posture information regarding the camera 2 is assumed here to be estimated by the SLAM process based on multiple pieces of image data, this is not limitative of how the posture estimating section 220 of this embodiment operates. Alternatively, the posture information regarding the camera 2 upon image capture may be actually measured and recorded. The records may then be used to acquire the posture information P regarding the camera 2 at the image capture point T at which each piece of image data was captured as well as the posture information P regarding the camera 2 at the time of capturing the image data. The posture estimating section 220 stores the posture information P regarding the camera 2 upon capture of the acquired image data into the map information holding section 400 in association with the identification information identifying the corresponding image data.

Here, a specific example of the processing performed by the map information estimating section 210 is explained. In this embodiment, for example, every time a new piece of image data is input from the image acquiring section 20, the map information estimating section 210 checks whether or not the image data input in the past and stored in the storage section 12 includes the image data selected as the image data (key frame) satisfying a predetermined condition. In the description that follows, the newly input piece of image data will be referred to as the current frame. Whereas various conditions for selecting the key frame may be adopted from widely known options such as those used in the above-mentioned PTAM (G. Klein, D. W. Murray, Parallel Tracking and Mapping for Small AR Workspaces, ISMAR, pp. 1-10, 2007 (DOI 10.1109/ISMAR.2007.4538852)), the information regarding "distance" to the nearest key frame will be used as the condition hereunder. The word "distance" in this context may not comply with the mathematical concept of distance, and the distance may be a Euclidean distance between the key frame and the current frame from one image capture point to another.

Also, in the case where the image data held in the storage section 12 does not include the image data selected as the key frame, the map information estimating section 210 generates the depth information either on the basis of multiple pieces of image data output from the camera 2, or on the basis of stereo-pair image data output from the paired cameras 2L and 2R as the current frame.

When the image data selected as the key frame is held in the storage section 12, the map information estimating section 210 carries out the following process. That is, for example, on the basis of the posture information regarding the camera 2 following estimation from the image data most recently stored in the storage section 12, the map information estimating section 210 estimates temporary posture information regarding the camera 2 at the time of capturing the current frame on the assumption that the camera 2 moves either at a constant and isogonal speed or at a constant acceleration and isogonal speed, from the position at which the image data was captured.

Using the temporary posture information, the map information estimating section 210 selects, as a notable key frame, a key frame having the shortest distance to the current frame from among the image data selected as the key frames.

As discussed above, the distance here may be a Euclidean distance or, with no need to comply with the mathematical concept, a distance determined in a manner different from that of the Euclidean distance. A distance different from the Euclidean distance may be determined as follows. For example, a predetermined shape range inside a projection plane at a distance defined by a predetermined method from the frustum of the camera 2 at each image capture point is set as the target region for each image capture point. The target region at the image capture point at which the image data of the key frame was captured is included at a rate into the target region at which the image data of the current frame was captured. The rate of such inclusion is determined to be the value representing the distance.

When the predetermined condition for setting a new key frame is met, such as when the distance between the current frame and the notable key frame **(i.e.,** the distance in the sense discussed above) has exceeded a predetermined threshold value, the map information estimating section 210 adds the current frame as the key frame. The map information estimating section 210 then generates the depth information by referencing the information regarding the key frames selected so far other than the current frame.

For example, the map information estimating section 210 selects the key frame having the shortest distance to the current frame and different from the current frame as the notable key frame. The map information estimating section 210 establishes the corresponding relations between the pixels included in the selected notable key frame on one hand and the pixels included in the current frame on the other hand by epipolar search, for example. The map information estimating section 210 then estimates the distance **(i.e.,** depth) from the image capture position of the camera 2 having captured the current frame to the target captured by each pixel in the current frame, and stores the depth information thus estimated into the map information holding section 400 in association with the identification information identifying the corresponding image data. At this time, the map information estimating section 210 further associates the estimated depth information with the identification information identifying the image data of the notable key frame, as the identification information identifying the reference key frame.

In the case where the reference key frame cannot be found, such as where the distance between the current frame and the notable key frame exceeds a predetermined threshold distance or where the current frame is the initially selected key frame, the map information estimating section 210 may generate the depth information on the basis of multiple pieces of image data other than the key frames, or on the basis of stereo-pair image data output from the paired cameras 2L and 2R (where the camera 2 is a stereo camera) as the current frame.

The map information estimating section 210 stores the image data of the current frame added as the key frame and the generated depth information into the map information holding section 400 in association with the identification information identifying the image data.

On the other hand, in the case where the condition for setting a new key frame is not met, the map information estimating section 210 establishes the corresponding relations between the pixels included in the selected notable key frame on one hand and the pixels included in the current frame on the other hand by epipolar search, for example. The map information estimating section 210 then estimates the distance (depth) to the target captured by each pixel in the current frame from the image capture position of the camera 2 having captured the current frame, and stores the estimated distance into the map information holding section 400 in association with the identification information identifying the corresponding image data.

The above-described processing of the map information estimating section 210 is only an example. As discussed above, the map information estimating section 210 may adopt the common SLAM process based on the direct method or any one of various well-known methods. More detailed explanations or variations of these methods will not be discussed further.

The map information holding section 400 holds the map information generated by the map information estimating section 210. Here, the map information refers to the information regarding an environmental map arranged in the three-dimensional space, including the information representing a three-dimensional shape (e.g., mesh information) and a placement position (in coordinates of a global coordinate system) of the target captured by the camera 2. In this embodiment, for example, the map information held in the map information holding section 400 includes at least three kinds of information: the image data selected as the key frame to be discussed later, the depth information corresponding to the image data **(i.e.,** information indicating the distance between the target captured by each pixel in the image data and the camera having captured the image data), and the posture information (including the position and the imaging direction) regarding the camera 2 at the time of capturing the image data.

The above arrangement enables the image information processing apparatus 1 of this embodiment to obtain, at least in the image data of the key frame, the locations of the pixels (projection points) to which the coordinates of each point on the three-dimensional target in the global coordinate system are projected.

Further, the map information holding section 400 may hold object information generated by the optimization section 300 to be discussed later. Here, the object information includes information identifying the region occupied by a predetermined target in the same three-dimensional space as that of the environmental map, i.e., in the global coordinate system, and a shape vector of the target.

Here, the region occupied by the target may be the information identifying the global coordinate values of each vertex of a cuboid that circumscribes the target. The shape vector is a feature vector (embedded vector) representing the three-dimensional shape of the target (e.g., a polygon mesh shape in the three-dimensional space). Adopted in this example is the shape primer that can be estimated using methods such as one discussed by Zhu, R., Wang, C., Lin, C.-H., Wang, Z. & Lucey, S. Object-Centric Photometric Bundle Adjustment with Deep Shape Prior. 2018 Ieee Winter Conf Appl Comput Vis Wacv 894-902 (2018) doi:10.1109/wacv.2018.00103.

Also, the map information holding section 400 outputs the retained map information to the optimization section 300 according to the instructions input therefrom, as will be discussed later. The map information holding section 400 further updates the retained map information as per the instructions input from the optimization section 300.

The operations of the optimization section 300 are explained next. The processing performed by the optimization section 300 is asynchronous with the processing by the estimation processing section 200. In this embodiment, for example, the optimization section 300 optimizes the map information (e.g., the environmental map and camera posture information corresponding to the key frame) by use of key frame-related information held in the map information holding section 400 of the estimation processing section 200.

[Definitions of terms]

Prior to the explanation of the specific operations of the optimization section 300, the terms to be used in the explanation are defined below.

- Selection point: a point selected from over the target in the three-dimensional space
- Projection point: a point over a key frame corresponding to a selection point captured in any one of the key frames (i.e., a point projected from the selection point to the key frame)
- Related point: a selection point captured in common in multiple key frames (set of projection points projected from the selection point to each key frame)
- Each pixel expressed in luminance value in k-th key frame Fk (k=1, 2, ...): luminance function Ik
- Feature vector (embedded vector) representing a three-dimensional shape of an n-th target, e.g.**,** the shape primer that can be estimated using methods such as one discussed by Zhu, R., Wang, C., Lin, C.-H., Wang, Z. & Lucey, S. Object-Centric Photometric Bundle Adjustment with Deep Shape Prior. 2018 Ieee Winter Conf Appl Comput Vis Wacv 894-902 (2018) doi:10.1109/wacv.2018.00103: shape vector $\xi n$
- Global coordinate values of a point p over the target represented by the shape vector $\xi n$: coordinate function $f(\xi n, p)$
- Matrix that maps points in a global coordinate system captured by the camera 2 in a key frame Fk to the positions of the corresponding pixels in the key frame Fk (two-dimensional): camera projection matrix $\pi k$
- Two-dimensional range in which the target represented by the shape vector $\xi n$ is captured in the key frame Fk: visible point set Vk $(\xi n)$

[Explanations of components]

By referencing both the image data selected as a key frame and the map information, the object recognizing section 310 of the optimization section 300 detects a predetermined type of target from among the targets in the three-dimensional space in which the environmental map is estimated. The object recognizing section 310 then generates and outputs region information indicating the region occupied by the detected target in the three-dimensional space. The region information may be expressed in coordinate values of the global coordinate system. Detection of the target is a well-known object recognition process. For example, the process may be carried out by adopting the technology disclosed by Ahmadyan, A., Zhang, L., Ablavatski, A., Wei, J. & Grundmann, M. Objectron: A Large Scale Dataset of Object-Centric Videos in the Wild with Pose Annotations. 2021 Ieee Cvf Conf Comput Vis Pattern Recognit Cvpr 00, 7818-7827 (2021).

Here, there may be multiple objects to be detected. In this case, the object recognizing section 310 generates and outputs the region information for each of the detected targets.

Given the target detected by the object recognizing section 310 from the three-dimensional space, the shape information generating section 320 estimates a shape vector $\xi l$ (l=1, 2, ...) using the map information. For each of the targets recognized by the object recognizing section 310, the shape information generating section 320 generates the object information that includes the region information representing the three-dimensional region occupied by the target and the shape vector $\xi l$ of the target. The shape information generating section 320 stores the object information thus generated into the storage section 12.

The selection point selecting section 330 sequentially selects the object information generated by the shape information generating section 320, and selects, by a predetermined method, at least one point (i.e., a point in the three-dimensional space) over the target represented by the object information, as a selection point.

In this embodiment, for example, the selection point selecting section 330 references the shape vector $\xi n$ included in the selected object information so as to select at least one point on an edge (i.e., a side shared by multiple planes) of the shape of the target represented by the shape vector $\xi n$, as a selection point p, and obtain the coordinates (global coordinate values) of the selection point p.

Thereafter, the selection point selecting section 330 stores, into the storage section 12, selection point information having three kinds of information associated with each other: information identifying the selected object information, coordinates of the selection point obtained on the basis of the object information, and a selection point identifier unique to the selection point.

The initialization section 340 sequentially acquires, as notable selection point information, the information recorded in the selection point information stored in the storage section 12. The initialization section 340 searches the image data stored in the storage section 12 for a processing target made up of the image data in which the selection point (notable selection point) represented by the notable selection point information is captured, the image data being selected as a key frame Fi (i=1, 2, ...).

That is, the initialization section 340 sequentially selects the image data stored in the storage section 12 and, if the selected image data is image data selected as the key frame Fi, acquires the map information such as posture information $\theta i$ held in the map information holding section 400 in association with the identification information identifying the image data. The initialization section 340 checks whether or not the point over the target corresponding to the notable selection point is captured in the selected image data. The determination may be performed, for example, by checking whether or not the coordinate values stored in association with the notable selection point are included in the imaging range of the selected image data **(i.e.,** a frustum of the camera 2 at the time of capturing the key frame Fi).

Upon determining that the point over the target corresponding to the notable selection point is captured in the image data selected here, the initialization section 340 stores the selection point identifier included in the notable selection point information and the information identifying the image data **(i.e.,** information identifying the key frame Fi) into the storage section 12 in association with each other as projection information.

The initialization section 340 repeatedly executes the above process for each selection point. Thus, the initialization section 340 obtains the projection information associating each selection point with the information identifying the image data in which the selection point is captured.

The optimization processing section 350 performs the process of what is called bundle adjustment. In this embodiment, for example, the optimization processing section 350 references the projection information stored in the storage section 12 so as to reproject the selection point captured in common in a pair of key frames Fi and Fj (i≠j) using the posture information $\theta i$ and $\theta j$ regarding the camera 2 at the time of capturing the key frames Fi and Fj. The optimization processing section 350 then optimizes the parameters such as the posture information $\theta i$ regarding the camera 2 and the shape vector in such a manner as to minimize the difference in luminance (Photometric Error) between the pixels represented by the coordinates **(i.e.,** two-dimensional coordinates over the key frame) obtained by the reprojection within each of the key frames Fi and Fj.

Specifically, the optimization processing section 350 references the selection point information and the projection information stored in the storage section 12, in order to acquire sequentially the information recorded in the selection point information, as the notable selection point information. The optimization processing section 350 searches the projection information for the information identifying the image data and associated with the selection point identifier of the acquired notable selection point.

Here, in the case where there exist multiple pieces of information identifying the image data associated with the selection point identifier of the notable selection point, i.e., where the points over the target corresponding in common to the notable selection point are determined to be captured in multiple key frames, the optimization processing section 350 acquires the information identifying the image data associated with the selection point identifier of the notable selection point.

Using the posture information $\theta i$, $\theta j$, ... regarding the image data (key frames Fi, Fj, ...) identified by the acquired information as well as the global coordinate values of the notable selection point obtained from the selection point information, the optimization processing section 350 acquires the positions (projection points) Pi, Pj, ... to which the notable selection point is projected in the key frames Fi, Fj, ... in which the notable selection point is captured. The optimization processing section 350 stores an information set associating the information Fi identifying the key frames with the corresponding projection points Pi into the storage section 12 as related points, and repeats the above process.

In the case where the number of pieces of information identifying the image data associated with the selection point identifier of the notable selection point is 1 or fewer, the optimization processing section 350 selects the next (yet-to-be-selected) information included in the selection point information as the notable selection point, and repeats the above process.

The optimization processing section 350 performs the selection on all pieces of information included in the selection point information until the information is exhausted in the above process.

The optimization processing section 350 then obtains a photometric error E using the following formula (where N stands for the total number of key frames and M for the number of the corresponding projection points):

[Math. 1]

$$E = \sum_{i=1}^{N} \sum_{j\neq i}^{N} \sum_{k=1}^{M} \sum_{I \in V(\xi_k)} e\left(\theta_i, \theta_j, f(\xi_k, l)\right) \qquad (1)$$

Here, for each of all pairs of key frames Fi and Fj included in the related points, "e" is a value proportional to the square of the absolute value of the difference between the luminance value Ii(Pi)=Ii(πi(θi·p)) of the corresponding projection point Pi in one key frame Fi on one hand and the luminance value Ij(Pj)=Ij(πj(θj·p)) of the corresponding projection point Pj in the other key frame Fj on the other hand. For example, this value is expressed by the following formula:

[Math. 2]

$$e\left(\theta_i, \theta_j, p\right) = \frac{1}{2} \left\| I_i\left(\pi_i\left(\theta_i \cdot p\right)\right) - I_j\left(\pi_j\left(\theta_j \cdot p\right)\right) \right\|^2$$

The optimization processing section 350 optimizes the posture information θi regarding the camera 2, the shape vector ξn included in the notable object information, and the notable depth information (all referred to as the target parameters hereunder) in a manner minimizing the photometric error E expressed by the formula (1) above. The method of optimization here involves finding the combination of target parameters minimizing the photometric error E while minimally updating each of the target parameters. The optimization may be carried out by use of well-known methods for minimizing a nonlinear function, such as the Gauss-Newton method or the Levenberg-Marquardt method, and thus will not be discussed further in detail.

Using the target parameters optimized here, the optimization processing section 350 overwrites the corresponding information held in the map information holding section 400, thereby optimizing the information held therein.

The output section 25 outputs, to the outside, the information held in the map information holding section 400. The output section 25 outputs the information regarding the environmental map held in the map information holding section 400 to the outside for various uses.

[Operations]

The image information processing apparatus 1 according to the embodiment of the present invention is configured as explained above and operates as described below. In the description that follows, the image information processing apparatus 1 receives input of the image data captured by the camera 2 at multiple image capture points, the camera 2 moving in the three-dimensional space for image acquisition.

The image information processing apparatus 1 performs two kinds of processing asynchronously: a process of estimating environmental map information (estimation process), and a process of optimizing the estimated environmental map information. In the estimation process, the image information processing apparatus 1 selects a portion of the captured image data as a key frame using the SLAM process based on the direct method. The image information processing apparatus 1 obtains the posture information regarding the camera 2 at the image capture point of the key frame, as well as information (depth information) indicating the distance between each point of the target captured at the image capture point on one hand and the image capture point on the other hand.

Given the image data other than the key frames, the image information processing apparatus 1 performs the process of estimating the posture information and other information regarding the camera 2 at the image capture point of the image data by use of the posture information regarding the key frames and the depth information.

The image information processing apparatus 1 further generates the environmental map information based on the information obtained here. The environmental map information is reconfigured inside the global coordinate system (a fixed coordinate system regardless of the movement trajectory of the camera 2), representing the position and color of the target captured by the camera 2, for example.

The image information processing apparatus 1 stores the image data selected as the key frames, the corresponding posture information, and the depth information into the map information holding section 400 in association with each other. The image information processing apparatus 1 also stores the estimated environmental map information into the map information holding section 400.

Meanwhile, the image information processing apparatus 1 performs the steps indicated in FIG. 3 as the optimization process. In reference to the map information, the image information processing apparatus 1 detects at least one target of a predetermined type from among the targets in the three-dimensional space in which the environmental map is estimated (S11). The image information processing apparatus 1 generates and outputs region information representing the region occupied by the detected target in the three-dimensional space.

Also in step S11, the image information processing apparatus 1 estimates the shape vector $\xi_l$ (l=1, 2, ...) of the target detected in the three-dimensional space. For each target recognized in step S11, the image information processing apparatus 1 generates the object information including the region information representing the three-dimensional region occupied by the target and the shape vector $\xi_l$ of the target, and stores the generated object information into the storage section 12 (S12).

The image information processing apparatus 1 sequentially selects the object information generated in step S12 and, in reference to the shape vector $\xi_n$ included in the selected object information, selects at least one point on an edge (i.e., a side shared by multiple planes) of the shape of the target represented by the shape vector $\xi_n$, as the selection point p (S13). After obtaining the coordinates (global coordinate values) of the selected selection point p, the image information processing apparatus 1 stores the information identifying the selected object information, the coordinates of the selection point p obtained on the basis of the object information, and the selection point identifier unique to the selection point into the storage section 12 in association with each other as the selection point information (S14).

Next, the image information processing apparatus 1 sequentially acquires, as notable selection point information, the information regarding each selection point included in the selection point information stored in step S14. The image information processing apparatus 1 searches the image data stored in the storage section 12 for the processing target made up of the image data in which the selection point (notable selection point) represented by the notable selection point information is captured, the image data being selected as the key frame Fi (i=1, 2, ...) (S15).

The search may be performed by checking whether or not the coordinate values stored in association with the notable selection point are included in the imaging range of the selected image data (i.e., a frustum of the camera 2 at the time of capturing the key frame Fi). The image information processing apparatus 1 stores the information identifying the image data found by the search (i.e., information identifying the key frame Fi) and the selection point identifier included in the notable selection point information into the storage section 12 in association with each other as the projection information.

The image information processing apparatus 1 then determines whether or not there exist multiple pieces of information identifying the image data obtained by search in step S15 and associated with the selection point identifier of the notable selection point (S16). If there are multiple pieces of such information (S16: Yes), the image information processing apparatus 1 acquires the information identifying the image data associated with the selection point identifier of the notable selection point.

Using the posture information $\theta_i$, $\theta_j$, ... regarding the image data (key frames Fi, Fj, ...) identified by the acquired information as well as the global coordinate values of the notable selection point obtained from the selection point information, the image information processing apparatus 1 acquires the positions (projection points) Pi, Pj, ... to which the notable selection point is projected in the key frames Fi, Fj, ... in which the notable selection point is captured. The image information processing apparatus 1 stores an information set that associates the information Fi identifying the key frame with the corresponding projection point Pi into the storage section 12 as related points (S17), returns to step S15, and continues the process.

On the other hand, if, in step S16, there are no multiple pieces of information (1 or fewer) identifying the image data associated with the selection point identifier of the notable selection point (S16: No), the image information processing apparatus 1 returns to step S15 and continues the process.

After completing the processing of steps S15 through S17 on all pieces of information recorded in the selection point information, and for each of all pairs of key frames Fi and Fj included in the related points, the image information processing apparatus 1 obtains a value proportional to the square of the absolute value of the difference between the luminance value Ii(Pi)=Ii($\pi$i($\theta$i·p)) of the corresponding projection point Pi in one key frame Fi on one hand and the luminance value Ij(Pj)=Ij($\pi$j($\theta$j·p) of the corresponding projection point Pj in the other key frame Fj on the other hand using the following mathematical formula (S18):

[Math. 2]

$$e\left(\theta_i, \theta_j, p\right) = \frac{1}{2}\left\|I_i\left(\pi_i\left(\theta_i \cdot p\right)\right) - I_j\left(\pi_j\left(\theta_j \cdot p\right)\right)\right\|^2$$

By summing the values, the image information processing apparatus 1 obtains the photometric error E using the following formula (S19):

[Math. 1]

$$E = \sum_{i=1}^{N} \sum_{j \neq i}^{N} \sum_{k=1}^{M} \sum_{I \in V(\xi_k)} e\left(\theta_i, \theta_j, f(\xi_k, l)\right) \qquad (1)$$

The image information processing apparatus 1 updates the target parameters that include the posture information $\theta i$ regarding the camera 2, the shape vector $\xi n$ included in the notable object information, and the notable depth information in a manner minimizing the photometric error E expressed by the formula (1) above. Using the target parameters thus updated, the image information processing apparatus 1 overwrites the corresponding information held in the map information holding section 400, thereby optimizing the information held therein (S20).

The updating of the target parameters and the determination of convergence conditions may be performed by well-known methods for minimizing a nonlinear function, such as the Gauss-Newton method or the Levenberg-Marquardt method. These methods will not be discussed further in detail.

The image information processing apparatus 1 repeats the process in FIG. 3 until a predetermined iteration count is exhausted (or until a predetermined convergence condition is met).

In keeping with instructions input from the user, for example, the image information processing apparatus 1 outputs the optimized information such as the environmental map information held in the map information holding section 400 to the outside for various uses.

According to this embodiment, what needs to be optimized are the related points over the target represented by the object information. The number of notable points to be selected, i.e., the number of related points, is limited so as to lower the processing load of bundle adjustment.

[Variants]

It has been explained, for example, that given a target recognized in the three-dimensional space, the image information processing apparatus 1 reprojects a point over the target to the camera at the time of capturing each of multiple key frames, and minimizes the photometric error involved when carrying out bundle adjustment. However, in addition to the optimization process, the image information processing apparatus 1 of the present embodiment may further carry out a second-stage bundle adjustment process (i.e., a second optimization process of this invention) making use of the result of the initial optimization process.

In the second-stage bundle adjustment process, the image information processing apparatus 1 uses the result of the above optimization process to minimize the photometric error associated with the key frame and the corresponding depth information, the distance between the point over the target recognized in the three-dimensional space on one hand and the camera at the time of capturing each of multiple key frames on the other hand, and a depth information error (error in coordinates: geometric error).

In this example, the image information processing apparatus 1 minimizes the photometric error using the projection point resulting from projection of the selection point set over the target to the key frame, before performing the next step.

The image information processing apparatus 1 selects, as second selection points, multiple points over the target captured and recognized in the notable key frame. The image information processing apparatus 1 then obtains coordinates u(x, y) in the image data and a depth value du of the pixel corresponding to the coordinates in the notable depth information.

Given the second selection points, the image information processing apparatus 1 calculates a photometric error ep of a pair of key frames Fi and Fj in which the second selection points are captured, using the following mathematical formula:

[Math. 3]

$$e_p\left(\theta_{i,j}, u, d_u, \xi\right) = \frac{1}{2}\left\|I_i(u) - I_j\left(\pi_j\left(\theta_{i,j} \cdot \pi_i^{-1}(u, d_u)\right)\right)\right\|^2$$

The image information processing apparatus 1 further calculates a geometric error eg using the following formula:

[Math. 4]

$$e_g \left( \theta_{i,j}, u, d_u, \xi \right) = \frac{1}{2} \lambda \left\| d_u - \mathrm{dist} \left( \xi, \theta_i, u \right) \right\|^2$$

Given the above results, the image information processing apparatus 1 calculates a cost function $E_c$ using the following formula:
[Math. 5]

$$E_c = \sum_{i=1}^{N} \sum_{j \neq i}^{N} \sum_{u, d_u \in V_{i,j}} \left( e_p \left( \theta_{i,j}, u, d_u, \xi \right) + e_g \left( \theta_{i,j}, u, d_u, \xi \right) \right) \qquad (2)$$

While doing the above calculations, the image information processing apparatus 1 updates the posture matrix $\theta_i$, j of the camera 2, the shape vector $\xi$, and the depth value du in a manner minimizing the cost function $E_c$.

The posture matrix $\theta_i$, j is a relative posture matrix for converting the posture matrix of the camera 2 in one key frame Fi out of a pair of key frames Fi and Fj to the posture matrix of the camera 2 in the other key frame Fj. Consequently, the following formula:

[Math. 6]

$$\pi_j \left( \theta_{i,j} \cdot \pi_i^{-1} \left( u, d_u \right) \right)$$

serves to evaluate to which coordinates in one key frame Fj a point u in the other key frame Fi (i.e., a point at which there is a distance du between the camera 2 and the target as per the notable depth information) corresponds when the point u in the global coordinate system is reprojected to the camera 2 having captured the key frame Fj.

The function dist($\xi$, $\theta_i$, u) is a function that obtains the distance to the target at the point u in one key frame Fi (this is a Euclidean distance from the camera 2 to the corresponding point over the target) using the shape vector $\xi$ and the posture information $\theta_i$ regarding the camera 2 (consequently, the distance may differ from the value of the depth information). Furthermore, u, du∈Vi, j signify that the points corresponding to the points u and du are captured in both key frames Fi and Fj.

In this embodiment, for example, the points over the target are reprojected to the camera at the time of capturing each of multiple key frames so as to minimize the photometric error involved through bundle adjustment. This already optimizes the posture information regarding the camera 2, while the depth information regarding the region where the target is detected in the image data is also in an optimized state. As a result, at the time of the above-described second-stage bundle adjustment, even a relatively dense environmental map can be processed by bundle adjustment with a relatively low processing load.

[Selection of related points and second related points]

It has been explained above that the related points for performing bundle adjustment are selected randomly from among the points on the edges of the recognized target. However, this is not limitative of how the related points are selected by this embodiment.

For example, in view of minimizing the photometric error, the image information processing apparatus 1 may select the selection points from the region of the recognized target according to the complexity of luminance texture.

In this example, the control section 11 of the image information processing apparatus 1 acting as the selection point selecting section 330 obtains an image gradient (luminance gradient) of a luminance function Ii with respect to the key frame Fi in which the target detected from the three-dimensional space is captured. The image gradient may be adopted by use of well-known processes involving the use of gradient detecting filters such as the Sobel filter. In this example, given the image gradient thus obtained, the selection point selecting section 330 detects, in advance, a set Si of coordinates of the pixels (e.g., coordinate values of pixels in the key frame Fi) exceeding a predetermined threshold value from the image data to be processed.

The control section 11 acting as the selection point selecting section 330 then selects the coordinates of at least one pixel as the selection point p from inside an image range corresponding to the region of the target related to the object information (associated with any object identifier n) extracted from within the notable key frame Fi, the pixel coordinates being included in the previously detected set Si. In this manner, the control section 11 acquires the coordinates (global coordinate values) of the selection point p.

At the time of second related-point selection in the second-stage bundle adjustment process, the image information processing apparatus 1 may select a second selection point according to the complexity of luminance texture from the region of the recognized target in a manner similar to that of the above-described process.

Further, in this embodiment, while sequentially selecting multiple selection points (or second selection points), the image information processing apparatus 1 may select each new selection point (or second selection point) in such a manner that the Euclidean distance of the point to any of the previously selected points in the global coordinate system exceeds a predetermined threshold value. This allows the selection points (or second selection points) to be selected in a manner being distributed as evenly as possible in the environmental map.

As another alternative, during sequential selection of multiple selection points (or second selection points), the image information processing apparatus 1 may select each selection point (or second selection point) in such a manner that the Euclidean distance of the point to any of the previously selected points in two-dimensional coordinates of each key frame (a distance between pixels) exceeds a predetermined threshold value. In this example, the selection points (or second selection points) are selected in a manner being distributed as evenly as possible in the key frames.


[Reference Signs List]

    1: Image information processing apparatus
    2: Camera
    11: Control section
    12: Storage section
    13: Operation section
    14: Display section
    15: Communication section
    20: Image acquiring section
    25: Output section
    200: Estimation processing section
    210: Map information estimating section
    220: Posture estimating section
    300: Optimization section
    310: Object recognizing section
    320: Shape information generating section
    330: Selection point selecting section
    340: Initialization section
    350: Optimization processing section
    400: Map information holding section


**Claims**

1.  An image information processing apparatus for receiving a series of pieces of image data obtained by a moving camera capturing an image in a three-dimensional space, in order to estimate posture information regarding the camera capturing each piece of image data and map information regarding a captured target, the image information processing apparatus comprising:

    a processor executing
    an estimation process of estimating the posture information regarding the camera at multiple points and the map information, and
    an optimization process of optimizing the estimated map information by projecting a common selection point in the captured three-dimensional space to different pieces of the captured image data to obtain a set of projection points as related points, before comparing, in terms of luminance, the projection points with each other as the related points, wherein,
    in the optimization process, the processor recognizes an object in the three-dimensional space captured in each of the multiple pieces of image data so as to select the selection point by a predetermined method from over the recognized object captured in common in the multiple pieces of image data.

2. The image information processing apparatus according to claim **1,** wherein the predetermined method for selecting the selection point involves selecting the selection point from one of the regions of the recognized object, the region corresponding to an edge of the object.

3. The image information processing apparatus according to claim 1, wherein the predetermined method for selecting the selection point involves selecting the selection point from one of the regions of the recognized object according to complexity of texture.

4. The image information processing apparatus according to claim **1,** wherein the processor further performs a second optimization process using a result of the optimization process and a coordinate error.

5. An image information processing method for use by an image information processing apparatus that includes a processor and receives a series of pieces of image data obtained by a moving camera capturing an image in a three-dimensional space, in order to estimate posture information regarding the camera capturing each piece of image data and map information regarding a captured target, the image information processing method comprising:

causing the processor to estimate the posture information regarding the camera at multiple points and the map information;
causing the processor to optimize the estimated map information by projecting a common selection point in the captured three-dimensional space to different pieces of the captured image data to obtain a set of projection points as related points, before comparing, in terms of luminance, the projection points with each other as the related points; and
causing the processor, in the optimization, to recognize an object in the three-dimensional space captured in each of the multiple pieces of image data so as to select the selection point by a predetermined method from over the recognized object captured in common in the multiple pieces of image data.

6. A program for causing an image information processing apparatus to receive a series of pieces of image data obtained by a moving camera capturing an image in a three-dimensional space, in order to estimate posture information regarding the camera capturing each piece of image data and map information regarding a captured target, the program comprising functions of:

causing the image information processing apparatus to estimate the posture information regarding the camera at multiple points and the map information;
causing the image information processing apparatus to optimize the estimated map information by projecting a common selection point in the captured three-dimensional space to different pieces of the captured image data to obtain a set of projection points as related points, before comparing, in terms of luminance, the projection points with each other as the related points; and
causing the image information processing apparatus, in the optimization, to recognize an object in the three-dimensional space captured in each of the multiple pieces of image data so as to select the selection point by a predetermined method from over the recognized object captured in common in the multiple pieces of image data.

# FIG.1

# FIG.2

IMAGE ACQUIRING SECTION
20

MAP INFORMATION ESTIMATING SECTION
210

200

POSTURE ESTIMATING SECTION
220

400

OUTPUT SECTION
25

INITIALIZATION SECTION
340

OBJECT RECOGNIZING SECTION
310

SHAPE INFORMATION GENERATING SECTION
320

SELECTION POINT SELECTING SECTION
330

OPTIMIZATION PROCESSING SECTION
350

300

# FIG.3

```
                    ( START )
                        │
                        ▼                    S11
        ┌──────────────────────────────┐
        │        DETECT TARGET          │
        └──────────────────────────────┘
                        │
                        ▼                    S12
        ┌──────────────────────────────┐
        │   GENERATE OBJECT INFORMATION │
        └──────────────────────────────┘
                        │
                        ▼                    S13
        ┌──────────────────────────────┐
        │     SELECT SELECTION POINT    │
        └──────────────────────────────┘
                        │
                        ▼                    S14
        ┌──────────────────────────────┐
        │  HOLD SELECTION POINT INFORMATION │
        └──────────────────────────────┘
                        │
                        ▼
        ╱ REPEAT FOR EACH SELECTION POINT ╲
                        │
                        ▼                    S15
        ┌──────────────────────────────┐
        │   SEARCH FOR KEY FRAME IN WHICH │
        │ NOTABLE SELECTION POINT IS CAPTURED │
        └──────────────────────────────┘
                        │
                        ▼                    S16
        ◁ ARE THERE MULTIPLE KEY FRAMES? ▷──── No
                        │ Yes
                        ▼                    S17
        ┌──────────────────────────────┐
        │ ACQUIRE POINT OF PROJECTION TO NOTABLE SELECTION POINT IN │
        │ EACH KEY FRAME AND RECORD PROJECTION POINTS AS RELATED POINTS │
        └──────────────────────────────┘
                        │
                        ▼
        ╲_____╱
                        │
                        ▼                    S18
        ┌──────────────────────────────┐
        │  OBTAIN VALUE e BASED ON DIFFERENCE IN │
        │ LUMINANCE VALUE BETWEEN RELATED POINTS │
        └──────────────────────────────┘
                        │
                        ▼                    S19
        ┌──────────────────────────────┐
        │    CALCULATE PHOTOMETRIC ERROR │
        └──────────────────────────────┘
                        │
                        ▼                    S20
        ┌──────────────────────────────┐
        │      UPDATE MAP INFORMATION   │
        └──────────────────────────────┘
                        │
                        ▼
                   ( RETURN )
```

## INTERNATIONAL SEARCH REPORT

| International application No. |
| --- |
| **PCT/JP2022/028392** |

| A. | CLASSIFICATION OF SUBJECT MATTER |
| --- | --- |

*G06T 7/593*(2017.01)i
FI:  G06T7/593

According to International Patent Classification (IPC) or to both national classification and IPC

| B. | FIELDS SEARCHED |
| --- | --- |

Minimum documentation searched (classification system followed by classification symbols)

G06T7/593

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | JP 2008-304268 A (SONY CORP.) 18 December 2008 (2008-12-18) paragraphs [0032], [0047], [0074], fig. 8 | 1-3, 5-6 |
| A | | 4 |
| Y | JP 11-25277 A (MATSUSHITA ELECTRIC INDUSTRIAL CO., LTD.) 29 January 1999 (1999-01-29) paragraphs [0109]-[0284] | 1-3, 5-6 |
| Y | JP 2018-22247 A (CANON INC.) 08 February 2018 (2018-02-08) paragraph [0068] | 1-3, 5-6 |
| Y | CN 111275764 A (NANKAI UNIVERSITY) 12 June 2020 (2020-06-12) paragraph [0003] | 1-3, 5-6 |
| Y | JP 2006-252275 A (JAPAN SCIENCE & TECHNOLOGY AGCY.) 21 September 2006 (2006-09-21) paragraph [0026] | 2-3 |
| Y | JP 2002-208011 A (FUJITSU LTD.) 26 July 2002 (2002-07-26) paragraph [0038] | 2-3 |

☐ Further documents are listed in the continuation of Box C.    ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **05 October 2022** | **18 October 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

International application No.

**PCT/JP2022/028392**

| Patent document cited in search report | | | Publication date (day/month/year) | Patent family member(s) | Publication date (day/month/year) |
|---|---|---|---|---|---|
| JP | 2008-304268 | A | 18 December 2008 | US 2008/0304707 A1 paragraphs [0049], [0066], [0094], fig. 8 | |
| JP | 11-25277 | A | 29 January 1999 | US 6546120 B1 column 12, line 54 to column 25, line 59 | |
| JP | 2018-22247 | A | 08 February 2018 | (Family: none) | |
| CN | 111275764 | A | 12 June 2020 | (Family: none) | |
| JP | 2006-252275 | A | 21 September 2006 | (Family: none) | |
| JP | 2002-208011 | A | 26 July 2002 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ZHU, R** ; **WANG, C** ; **LIN, C.-H** ; **WANG, Z** ; **LUCEY, S**. Object-Centric Photometric Bundle Adjustment with Deep Shape Prior. *2018 Ieee Winter Conf Appl Comput Vis Wacv*, 2018, 894-902
- **ZHU, R.** ; **WANG, C.** ; **LIN, C.-H** ; **WANG, Z.** ; **LUCEY, S**. Object-Centric Photometric Bundle Adjustment with Deep Shape Prior. *2018 Ieee Winter Conf Appl Comput Vis Wacv*, 2018, 894-902

- **AHMADYAN, A** ; **ZHANG, L** ; **ABLAVATSKI, A** ; **WEI, J.** ; **GRUNDMANN, M.** Objectron: A Large Scale Dataset of Object-Centric Videos in the Wild with Pose Annotations. *2021 Ieee Cvf Conf Comput Vis Pattern Recognit Cvpr 00*, 2021, 7818-7827